# EUROPÄISCHE PATENTSCHRIFT

(11) **EP 0 710 625 B1**
(45) Veröffentlichungstag und Bekanntmachung des Hinweises auf die Patenterteilung: **30.05.2001**
(21) Anmeldenummer: 95117345.9
(22) Anmeldetag: 03.11.1995
(51) Int. Cl.: C02F 1/52, B01F 5/06

(54) **Vorrichtung und Verfahren zur Flockung von Suspensionen**
Device and process for the flocculation of suspensions
Dispositif et procédé pour la floculation de suspensions

(30) Priorität: 03.11.1994 DE 4439311
(43) Veröffentlichungstag der Anmeldung: 08.05.1996
(73) Patentinhaber: BASF AKTIENGESELLSCHAFT, 67056 Ludwigshafen (DE)
(72) Erfinder: Trägner-Dühr, Ulrich, Dr., D-54329 Konz (DE); Böhm, Achim, D-67227 Frankenthal (DE)
(74) Vertreter: Isenbruck, Günter, Dr.

(56) Entgegenhaltungen:
- GB-A- 1 354 691
- SOVIET PATENT ABSTRACTS Section Ch, Week 8824 16.Juni 1988 Derwent Publications Ltd., London, GB; Class H01, AN 88-166844 & SU-A-1 353 489 (VOLG OIL IND DES) , 23.November 1987

## Beschreibung

Die vorliegende Erfindung bezieht sich auf eine Vorrichtung und ein Verfahren zur Flockung von Suspensionen. Insbesondere sollen Suspensionen aus der Abwasserbehandlung, der chemischen Produktion oder der Trinkwasseraufbereitung geflockt werden.

Die in vielen Bereichen der Verfahrenstechnik notwendige Trennung eines Feststoff-Flüssigkeits-Gemisches wird durch die Bildung von Flocken stark erleichtert oder erst ermöglicht. Insbesondere für die optimale Schlammentwässerung ist die Bildung einer gut zu entwässernden Schlammflocke erforderlich. So müssen Abwasserschlämme in Klärwerken in der Regel erst geflockt werden, bevor sie entwässert und damit geklärt werden können.

Für die Flockung von Suspensionen mit organischen oder anorganischen Flockungsmitteln sind bisher verschiedene Verfahren bekannt. Eine sehr gute Flockung findet bei stationärem Volumenstrom statt, wobei die Flockung der Suspension durch Rühren oder eine andere Art der Vermischung erfolgen kann. Um einem verschiedenen Anfall von Suspensionsmengen gerecht zu werden, muß allerdings der geflockte Schlamm in einer Pumpenvorlage zwischengelagert werden. Während der Zwischenlagerung treten Sedimentationserscheinungen auf, die zu einem ungleichmäßigen Entwässerungsergebnis führen können.

Eine diskontinuierliche Flockung vermeidet diesen Nachteil. Sie kann in einer Förderpumpe stattfinden, wobei der Suspension auf der Saugseite der Pumpe das Flockungsmittel zudosiert wird. Die Flockung findet dann in der Pumpe statt und eine Sedimentation in einer Pumpenvorlage entfällt. Nachteilig ist hierbei, daß das Flockungsergebnis stark vom Volumenstrom und dem Pumpenzustand abhängt.

Um bei verschiedenen Volumenströmen ein konstantes Flockungsergebnis zu erzielen, kann ein Keilflachschieber in den Volumenstrom der Suspension eingeschaltet werden. Durch eine externe motorische Steuerung des Keilflachschiebers wird der freie Querschnitt der Rohrleitung proportional zum Volumenstrom verändert. Damit soll die Flockung in der Rohrleitung konstant gehalten werden. Nachteil dieser Anordnung ist, daß die motorische Steuerung mechanisch aufwendig ist, da eine Wellendurchführung in den Flockungsreaktor bei hohem Systemdruck zu erheblichen Problemen führen kann. Darüber hinaus ist ein aufwendiges Regelkonzept notwendig, um den Volumenstrom zu messen und den Keilflachschieber nach dieser Meßgröße einzustellen.

Aufgabe der vorliegenden Erfindung ist die Bereitstellung einer Vorrichtung und eines Verfahrens zur Flockung von Suspensionen, wobei die Unabhängigkeit des Flockungsergebnisses vom Volumenstrom durch eine einfache technische Lösung erreicht wird.

Diese Aufgabe wird erfindungsgemäß durch die in den Ansprüchen beschriebene Vorrichtung und das entsprechende Verfahren gelöst, wie es im folgenden beschrieben wird.

Erfindungsgemäß wird nach den Ansprüchen eine Vorrichtung zur Flockung von Suspensionen bereitgestellt, die aus einem Reaktor zur Leitung eines Volumenstroms einer zu flockenden Suspension besteht. In dem Reaktor sind eine oder mehrere Drosselanordnungen im Suspensionsstrom angebracht, die mit steigendem Volumenstrom der Suspension ohne äußere Regelung einen größeren Reaktorquerschnitt freigeben. Die zu flockende Suspension kann insbesondere aus der Abwasserbehandlung, der chemischen Produktion oder der Trinkwasseraufbereitung sein. In einer bevorzugten Ausführungsform der Vorrichtung werden mehrere Elemente, die jeweils aus einem Reaktorteil und einer Drosselanordnung bestehen, im Baukastensystem hintereinander angeordnet. Dadurch kann die Leistungsfähigkeit eines Flockungsreaktors durch die Verwendung einer verschieden großen Anzahl solcher Elemente beliebig verändert werden. In einer weiteren bevorzugten Ausführungsform sind die Drosselanordnungen in ihrem Widerstandsverhalten gegen den Suspensionsstrom derart gestaltet, daß der an ihnen auftretende Druckverlust nur im verhältnismäßig geringen Maße mit dem Volumenstrom der Suspension variiert - d.h. der Druckverlust ändert sich nicht so stark wie vergleichsweise bei einem herkömmlichen (statischen) Mischrohr (siehe letzter Absatz des Beispiels). Durch die Konstanthaltung des an jeder Drossel auftretenden Druckverlustes der Suspension kann eine gleichmäßige Flockung erreicht werden, die nicht vom Volumenstrom der Suspension abhängig ist.

Die Drosselanordnungen sind reversibel biegsam und werden von der anströmenden Suspension reversibel verbogen. Die Drosselanordnungen, die aus Blenden bestehen, sind durch Schlitze in Segmente unterteilt. Diese Schlitze verlaufen von der Mitte der Blende nach außen. Bevorzugt sind Ausführungsformen, bei denen der Reaktor bzw. die einzelnen Reaktorteile rohrförmig ausgebildet sind.

Die Verfahrensaufgabe wird erfindungsgemäß durch das in den Ansprüchen definierte Verfahren zur Flockung von Suspensionen gelöst. Dabei wird ein Volumenstrom einer zu flockenden Suspension, insbesondere einer wäßrigen Suspension aus der Abwasserbehandlung, der chemischen Produktion oder der Trinkwasseraufbereitung durch einen Reaktor mit Drosselanordnungen im Suspensionsstrom geleitet. Die Drosselanordnungen sind dabei derart gestaltet und in der Vorrichtung angeordnet, daß mit steigendem Volumenstrom der Suspension ein größerer Reaktorquerschnitt freigegeben wird, ohne daß es einer äußeren Regelung bedarf. Bevorzugt ist ein Verfahren, bei dem mehrere im Baukastensystem hintereinander angeordnete Elemente, die jeweils aus einem Reaktorteil und einer Drosselanordnung bestehen, verwendet werden. Weiter bevorzugt ist ein Verfahren, bei dem Drosselanordnungen verwendet werden, die in ihrem Widerstandsverhalten gegen die Suspension derart gestaltet sind, daß der an ihnen auftretende Druckverlust nur im verhältnismaßig geringen Maße mit dem Volumenstrom der Suspension variiert - d.h. der Druckverlust ändert sich nicht so stark wie vergleichsweise bei einem herkömmlichen (statischen) Mischrohr (siehe Beispiel). Dadurch wird eine gleichmäßige Flockung bei unterschiedlichen Volumenströmen gewährleistet.

Es werden Drosselanordnungen verwendet, die reversibel biegsam sind und von dem Volumenstrom der Suspension reversibel verbogen werden. Als Drosselanordnungen werden Blenden verwendet, die durch Schlitze, die von der Mitte der Blende nach außen verlaufen, in Segmente unterteilt werden. Bevorzugt ist die Verwendung eines rohrförmig ausgebildeten Reaktors bzw. rohrförmig ausgebildeter Reaktorteile.

Die Vorrichtung, wie sie in einem der Vorrichtungsansprüche beschrieben ist, kann insbesondere für die Flockung von wäßrigen Suspensionen aus der Abwasserbehandlung, der chemischen Produktion oder der Trinkwasseraufbereitung verwendet werden.

Die Erfindung wird nun anhand der Figuren 1 bis 3 beschrieben. Es zeigen:
- Fig. 1:: Aufbau eines selbstregelnden Flockungsreaktors;
- Fig. 2:: Funktionsweise eines selbstregelnden Flockungsreaktors;
- Fig. 3:: Beispiele für Blendenausführungen.

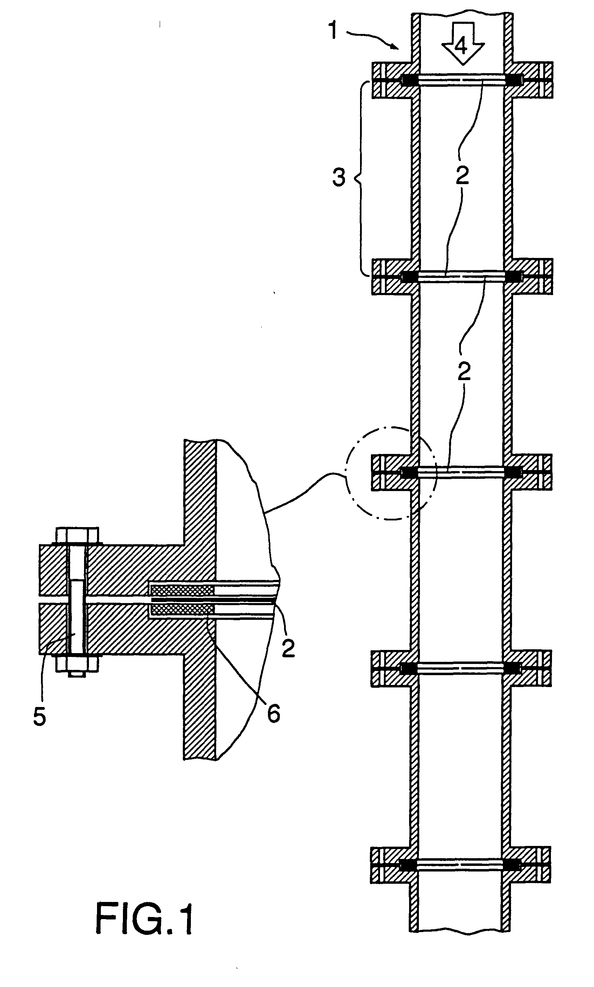

Fig. 1 zeigt einen Flockungsreaktor 1, in den ein Volumenstrom 4 einer zu flockenden Suspension eingebracht wird. Die zu flockende Suspension besteht insbesondere aus einem Schlamm aus der Abwasserbehandlung, einer Suspension aus der chemischen Produktion oder einem Fällprodukt aus der Trinkwasseraufbereitung. In dem Reaktor 1 sind Drosselanordnungen vorgesehen, die in der Wand des Reaktors 1 gelagert sind. Der Reaktor 1 besteht hier aus Reaktorteilen 3, die mittels einer Flanschverschraubung 5 und einer Flachdichtung 6 miteinander verbunden sind. Im Baukastensystem können somit beliebig viele Reaktorteile 3 mit Drosselanordnungen 2 hintereinander angeordnet werden. Die Anpassung des Flockungsreaktors an verschiedene Einsatzbedingungen erfolgt durch die Veränderung der Reaktorgeometrie, durch die Veränderung der Anzahl der im Baukastensystem hintereinander geschalteten Elemente, durch die Form des Reaktors sowie insbesondere durch die Anpassung des Drosselmaterials, der Drosselgeometrie und der Drosselanordnung in dem Reaktor.

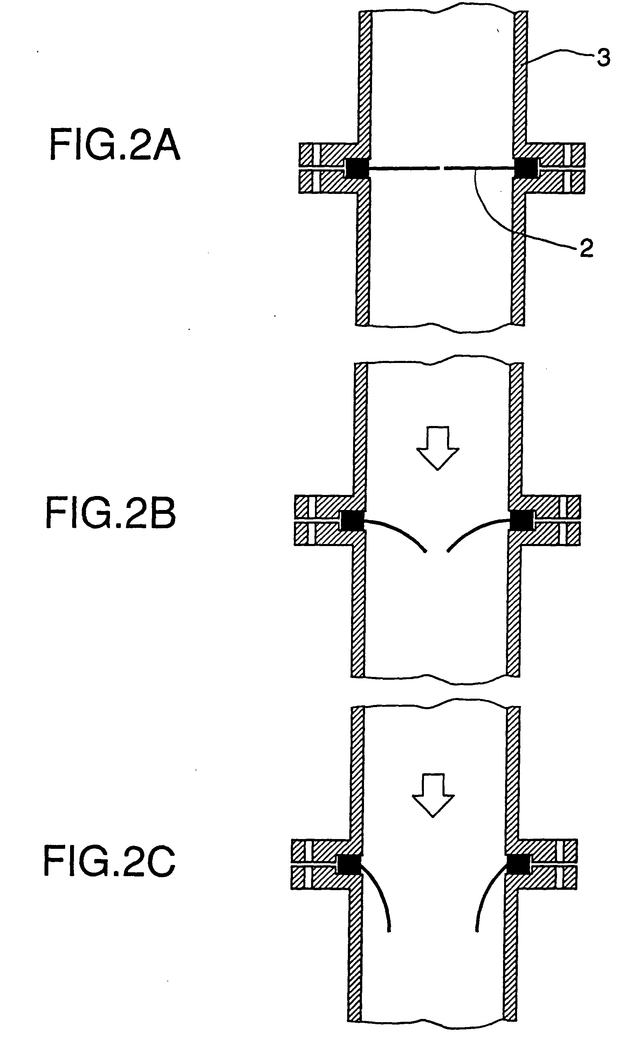

Fig. 2 zeigt den selbstregelnden Flockungsreaktor in Betrieb. In Fig. 2A stehen die vorgesehenen Blenden noch senkrecht zum rohrförmigen Reaktorgehäuse, da noch keine Suspension durch den Reaktor strömt. Mit der Zuführung eines Volumenstroms einer Suspension geben die Drosseln oder Blenden einen immer größeren Reaktorquerschnitt frei (Fig. 2B und 2C).

Die in Fig. 2 gezeigten Drosseln sind fest in der Reaktorwand gelagert. Sie werden von der anströmenden Suspension reversibel verbogen. Die Kennlinie dieses Verbiegungsvorganges ist durch die Gestaltung der Drossel so abgestimmt, daß der Druckabfall an der Drossel nur im verhältnismäßig geringen Maße mit dem Volumenstrom der Suspension variiert.

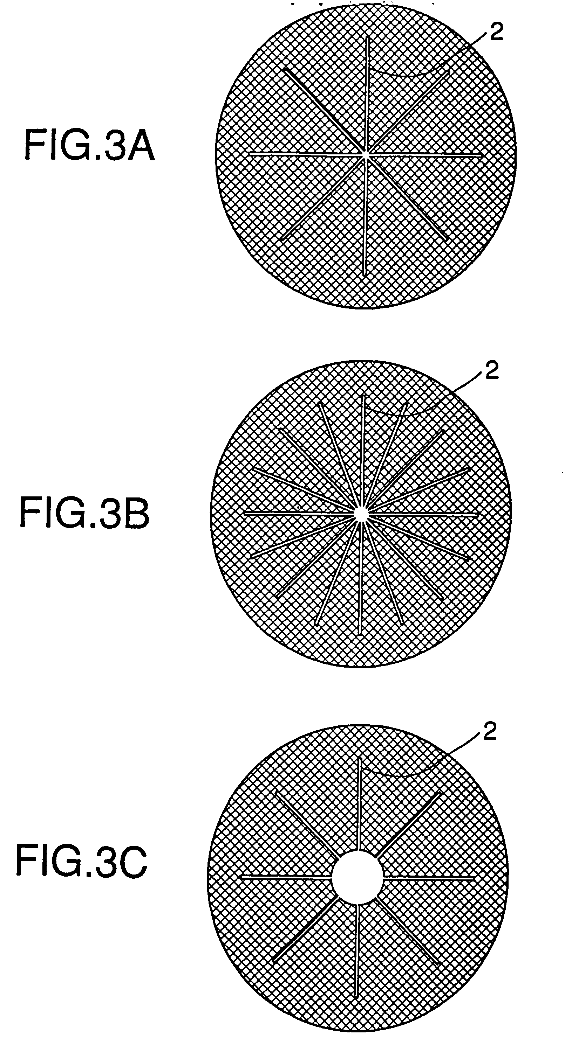

Fig. 3 zeigt Blendenausführungen, die bevorzugt als Drosseln verwendet werden können. Die Blenden haben dabei kreisförmigen Querschnitt für die Verwendung in einem rohrförmigen Reaktor, und sind durch in der Mitte der Blende beginnende und radial nach außen verlaufende Schlitze in Segmente unterteilt. Sowohl die Zahl der Segmente wie auch die Länge und Form der nach außen verlaufenden Schlitze und die ohne Verbiegung der Segmente freigegebene Öffnung können variiert und an die speziellen Bedürfnisse der Anwendung angepaßt werden. Eine Anpassung an die Einsatzaufgabe erfolgt auch durch die Auswahl des Materials (Metall, Kunststoff) und die Gestaltung der einzelnen Segmente. So können die Segmente bereits vorgebogen sein oder Verstärkungen im äußeren Bereich aufweisen. Insbesondere die Einstellung der Blendenparameter erlaubt die Anpassung der Differenzdruck-Volumenstrom-Kennlinie an die Flockungsaufgabe.

### BEISPIEL

In einem Mischer mit zwei Rührwellen wurden 6 t Klärschlamm mit einem Schlammtrockenstoffgehalt von 6,2 Gew.-% mit 186 kg einer 40%igen Flotationskohle-Suspension vermischt. Von dem Mischer, der auch als Pumpenvorlage diente, wurde das Schlammgemisch mittels Exzenterschneckenpumpe dem selbstregelnden Flockungsreaktor zugeführt. Ebenfalls über eine Exzenterschneckenpumpe wurde eine 0,1%ige wäßrige Lösung eines organischen Flockungsmittels zugeführt.

Dabei wurde das Volumenstromverhältnis von Schlamm zu Flockungsmittel auf einem konstanten Wert von 5,4 gehalten. Dies entspricht einer Flockungsmitteldosierung von 3 kg Flockungsmittel pro Tonne Schlammtrockenstoffgehalt. Dem selbstregelnden Flockungsreaktor nachgeschaltet war eine Membranfilterpresse mit 10 Kammern, einer Rahmengröße von 2 x 2 m und einer Kammertiefe von 40 mm.

Der selbstregelnde Flockungsreaktor bestand aus sieben Rohrschüssen (DN80) mit jeweils einer Blende und einer Gesamtlänge von 110 cm. Die Reaktorblenden bestanden aus 0,1 mm starkem CrNi-Stahl und waren jeweils in acht Segmente aufgeteilt. Das Flockungsmittel wurde über eine Ringleitung und acht Düsen in den Flockungsreaktor eingebracht.

Der turbulente Volumenstrom durch den selbstregelnden Flockungsreaktor war durch ein rechnergesteuertes Füllprogramm für die Membranfilterpresse vorgegeben. Während der ca. 40minütigen Beschickungsphase der Membranfilterpresse fiel der Volumenstrom von anfangs 17 m³/h auf 2 m³/h. Dabei stieg der Systemdruck im Flockungsreaktor auf 8 bar an. Der Druckabfall über die Gesamtlänge des selbstregelnden Flockungsreaktors fiel dabei von 350 mbar bei 17 m³/h auf 170 mbar bei 2m³/h.

Trotz einer Volumenstromänderung um den Faktor 8,5 veränderte sich somit der Druckabfall nur um den Faktor 2. Bei der vorgenommenen turbulenten Flockung hätte sich in einem herkömmlichen Mischrohr der Druckabfall etwa um den Faktor 70 geändert. Die erheblich geringere Veränderung des Druckabfalls bei dem erfindungsgemäßen Verfahren führt zu gleichmäßiger Flockung über die gesamte Füllzeit.

## Patentansprüche

1. Vorrichtung zur Flockung von Suspensionen, bei der in einem Reaktor (1) zur Leitung eines Volumenstroms (4) einer zu flockenden Suspension, insbesondere eines Abwasserschlammes, eine oder mehrere Drosselanordnungen (2) im Suspensionsstrom angebracht sind, die mit steigendem Volumenstrom der Suspension ohne äußere Regelung einen größeren Reaktorquerschnitt freigeben, wobei die Drosselanordnungen (2) Blenden sind, die durch Schlitze, die von der Mitte der Blende nach außen verlaufen, in Segmente unterteilt sind, die Drosselanordnungen (2) reversibel biegsam sind und von dem Volumenstrom der Suspension reversibel verbogen werden, der Reaktor (1) bzw. die Reaktorteile (3) rohrförmig ausgebildet sind und zeitlich vor dem Durchströmen der Suspension durch den Reaktor die Blenden senkrecht zum rohrförmigen Reaktorgehäuse stehen.

2. Vorrichtung nach Anspruch 1, dadurch gekennzeichnet, daß mehrere Elemente, bestehend jeweils aus einem Reaktorteil (3) und einer Drosselanordnung (2), im Baukastensystem hintereinander angeordnet sind.

3. Vorrichtung nach einem der vorhergehenden Ansprüche, dadurch gekennzeichnet, daß die Drosselanordnungen (2) in ihrem Widerstandsverhalten gegen den Suspensionsstrom derart gestaltet sind, daß der an ihnen auftretende Druckverlust der Suspension nur im verhältnismäßig geringen Maße mit dem Volumenstrom der Suspension variiert.

4. Verfahren zur Flockung von Suspensionen, dadurch gekennzeichnet, daß ein Volumenstrom (4) einer zu flockenden Suspension, insbesondere eines Abwasserschlammes, durch einen Reaktor (1) mit Drosselanordnungen (2) im Suspensionsstrom geleitet wird, wobei die Drosselanordnungen (2) mit steigendem Volumenstrom der Suspension ohne äußere Regelung einen größeren Reaktorquerschnitt freigeben, die Drosselanordnungen (2) Blenden sind, die durch Schlitze, die von der Mitte der Blende nach außen verlaufen, in Segmente unterteilt sind, die Drosselanordnungen (2) reversibel biegsam sind und von dem Volumenstrom der Suspension reversibel verbogen werden.

5. Verfahren nach Anspruch 4, dadurch gekennzeichnet, daß der Volumenstrom (4) durch mehrere im Baukastensystem hintereinander angeordnete Elemente, bestehend jeweils aus einem Reaktorteil (3) und einer Drosselanordnung (2), geleitet wird.

6. Verfahren nach einem der vorhergehenden Verfahrensansprüche, dadurch gekennzeichnet, daß Drosselanordnungen (2) verwendet werden, die in ihrem Widerstandsverhalten gegen die Suspension derart gestaltet sind, daß der an ihnen auftretende Druckverlust der Suspension nur im verhältnismäßig geringen Maße mit dem Volumenstrom der Suspension variiert.

7. Verfahren nach einem der vorhergehenden Ansprüche, dadurch gekennzeichnet, daß ein rohrförmig ausgebildeter Reaktor (1) bzw. rohrförmig ausgebildete Reaktorteile (3) verwendet werden.

## Claims

1. An apparatus for flocculating suspensions in which one or more throttling arrangements (2) are mounted in the suspension flow in a reactor (1) for passing through a volumetric flow (4) of a suspension to be flocculated, in particular a wastewater sludge, which throttling arrangements release a greater reactor cross-sectional area, without external control, as the volumetric flow of the suspension increases, the throttling arrangements (2) being orifice plates which are subdivided into segments by slots which run from the center of the orifice plate to the outside, the throttling arrangements (2) being reversibly flexible and being reversibly bent by the volumetric flowrate of the suspension, the reactor (1) and the reactor parts (3) being constructed so as to be tubular and the orifice plates being perpendicular to the tubular reactor shell temporally before the suspension flows through the reactor.

2. An apparatus as claimed in claim 1, wherein a plurality of elements, each consisting of a reactor part (3) and a throttling arrangement (2), are disposed one after the other in a module system.

3. An apparatus as claimed in one of the preceding claims, wherein the throttling arrangements (2) have a resistance behavior toward the suspension flow such that the suspension pressure drop occurring at them varies only to a relatively small extent with the volumetric flow of the suspension.

4. A process for flocculating suspensions, wherein a volumetric flow (4) of a suspension to be flocculated, in particular a wastewater sludge, is passed through a reactor (1) having throttling arrangements (2) in the suspension flow, the throttling arrangements (2) releasing a larger reactor cross-sectional area, without external control, as the volumetric flow of the suspension increases, the throttling arrangements (2) being orifice plates which are subdivided into segments by slots which run from the center of the orifice plate to the outside, the throttling arrangements (2) being reversibly flexible and being reversibly bent by the volumetric flow of the suspension.

5. A process as claimed in claim 4, wherein the volumetric flow (4) is passed through a plurality of elements disposed one after the other in a module system, each element consisting of a reactor part (3) and a throttling arrangement (2).

6. A process as claimed in one of the preceding process claims, wherein throttling arrangements (2) are used which have a resistance behavior toward the suspension such that the suspension pressure drop occurring at them varies only to a relatively small extent with the volumetric flow of the suspension.

7. A process as claimed in one of the preceding claims, wherein a tubular reactor (1) and tubular reactor parts (3) are used.

## Revendications

1. Dispositif de floculation de suspensions, dans lequel, dans un réacteur (1) destiné à conduire un courant volumique (4) d'une suspension à floculer, en particulier d'une boue d'eaux résiduaires, sont agencés un ou plusieurs dispositifs d'étranglement (2) dans le courant de suspension, qui, avec un courant volumique croissant de la suspension, libèrent une section transversale de réacteur plus grande sans réglage extérieur, les dispositifs d'étranglement (2) étant des écrans qui sont subdivisés en segments par des fentes qui s'étendent depuis le milieu de l'écran vers l'extérieur, les dispositifs d'étranglement (2) étant flexibles de manière réversible et étant fléchis de manière réversible par le courant volumique de la suspension, le réacteur (1) ou respectivement les parties de réacteur (3) étant réalisés sous forme tubulaire et les écrans étant, dans le temps, avant le passage de la suspension à travers le réacteur, disposés perpendiculairement au corps tubulaire de réacteur.

2. Dispositif suivant la revendication 1, caractérisé en ce que plusieurs éléments, constitués chacun d'une partie de réacteur (3) et d'un dispositif d'étranglement (2), sont agencés l'un derrière l'autre dans un système de construction par blocs.

3. Dispositif suivant l'une des revendications précédentes, caractérisé en ce que les dispositifs d'étranglement (2) sont, dans leur comportement de résistance au courant de suspension, réalisés de façon que la perte de pression de la suspension qui apparaît sur eux ne varie que dans une mesure relativement faible avec le courant volumique de la suspension.

4. Procédé de floculation de suspensions, caractérisé en ce qu'un courant volumique (4) d'une suspension à floculer, en particulier d'une boue d'eaux résiduaires, est conduit à travers un réacteur (1) pourvu de dispositifs d'étranglement (2) dans le courant de suspension, les dispositifs d'étranglement (2) libérant, avec un courant volumique croissant de la suspension, une section transversale de réacteur plus grande sans réglage extérieur, les dispositifs d'étranglement (2) étant des écrans qui sont subdivisés en segments par des fentes qui s'étendent depuis le milieu de l'écran vers l'extérieur, les dispositifs d'étranglement (2) étant flexibles de manière réversible et étant fléchis de manière réversible par le courant volumique de la suspension.

5. Procédé suivant la revendication 4, caractérisé en ce que le courant volumique (4) est conduit à travers plusieurs éléments qui sont agencés l'un derrière l'autre dans un système de construction par blocs et qui sont constitués chacun d'une partie de réacteur (3) et d'un dispositif d'étranglement (2).

6. Procédé suivant l'une des revendications précédentes, caractérisé en ce qu'on utilise des dispositifs d'étranglement (2) qui, dans leur comportement de résistance envers la suspension, sont réalisés de façon que la perte de pression de la suspension qui apparaît sur eux ne varie que dans une mesure relativement faible avec le courant volumique de la suspension.

7. Procédé suivant l'une des revendications précédentes, caractérisé en ce qu'on utilise un réacteur (1) réalisé sous forme tubulaire ou des parties de réacteur (3) réalisées sous forme tubulaire.
